# DEMANDE DE BREVET EUROPEEN

(11) **EP 4 277 161 A1**
(43) Date de publication de la demande: **15.11.2023**
(21) Numéro de dépôt: 22305714.2
(22) Date de dépôt: 13.05.2022
(51) Int. Cl.: H04B 7/185, H04L 41/00, H04W 4/00, H04W 84/00

(54) **PLATEFORME 5G DE COUVERTURE SATELLITAIRE EN TEMPS REEL**

(71) Demandeur: Thales Dis France SAS, 92190 Meudon (FR); Thales, 92400 Courbevoie (FR)
(72) Inventeur: FINE, Jean-Yves, 13010 Marseille (FR); EL JAAFARI, Mohamed, 31100 Toulouse (FR); PANAITOPOL, Dorin, 92230 Gennevilliers (FR)
(74) Mandataire: Thomas, Christine Marie Catherine

(57) **Abrégé**

La présente invention concerne une fonction de réseau dite de gestion de couverture intégrée dans un cœur de réseau de cinquième génération configuré pour fonctionner en collaboration avec un système satellitaire présentant une couverture dynamique, le cœur de réseau collaborant avec un réseau d'accès (RAN), ladite fonction de réseau de gestion de couverture répondant aux exigences définies pour une architecture basée sur les services pour une fonction de réseau, cette fonction de réseau de gestion de couverture étant en outre configurée pour collecter des informations de couverture par le système satellitaire, pour traiter ces informations de couverture en fonction d'au moins une zone géographique définie par une autre fonction de réseau du cœur de réseau, répondant aussi aux exigences définies pour une architecture basée sur les services, pour générer en temps réel et fournir des informations de disponibilité du réseau d'accès à cette autre fonction de réseau du cœur de réseau.

## Description

### DOMAINE TECHNIQUE

L'invention concerne le domaine des télécommunications par satellite, dans le cas d'une intégration d'un système satellitaire au réseau cellulaire de 5ième génération (5G), tel que spécifié par l'organisme de standardisation 3GPP.

Plus précisément l'invention concerne une fonction de réseau dite de gestion de couverture intégrée dans un cœur de réseau de cinquième génération actif en collaboration avec un système satellitaire.

L'invention concerne aussi un cœur de réseau comprenant une telle fonction de réseau et un procédé mis en œuvre au sein d'une fonction de réseau selon l'invention.

### ETAT DE LA TECHNIQUE ANTERIEURE

L'organisme de standardisation 3GPP produit des normes définissant les besoins, l'architecture, le fonctionnement du système de communication mobile. Les éléments normatifs en relation avec le système satellitaire, que ce soit géostationnaire, orbite basse ou orbite moyenne, sont en développement.

Dans le cadre de la standardisation des réseaux 5G, il est ainsi prévu qu'un ensemble de satellites, gérés par un centre de contrôle satellitaire, fournissent une couverture de téléphonie mobile 5G. Cet ensemble de satellite constituera ainsi un réseau d'accès, seul ou en complément d'un réseau terrestre, vers un cœur de réseau administré par l'opérateur de téléphonie mobile. Un tel cœur de réseau met en œuvre les différentes fonctions inhérentes à ce réseau : sécurité, gestion de la mobilité, facturation, etc...

Pour différentes raisons, telles que, par exemple, le déploiement progressif de la constellation de satellites, les systèmes satellitaires ne permettant pas, par conception, une couverture totale du globe terrestre ou même d'une zone du globe. Cela peut être dû à des opérations de maintenance, à une panne partielle du système d'accès satellite... Il est ainsi possible qu'une zone géographique donnée ne bénéficie pas d'une couverture satellitaire en continu. Une telle discontinuité de couverture, récurrente ou non, va avoir un impact sur le système de télécommunication 5G (5GS) dès lors que les systèmes satellitaires vont y être intégrés.

Il existe actuellement des services internet de fourniture des éléments de couverture satellite, par exemple le système Iridium https://www.qsattrack.com/home/iridiumsatellites. Cependant ce système est basé sur une infrastructure internet avec les avantages et inconvénients inhérents à cette infrastructure.

Plus précisément, dans les systèmes satellitaires satcom (donc de télécommunication non-terrestre) existants, il peut y avoir des trous de couverture. De telles zones changent sans cesse de minutes en minutes. Ces aléas de couverture doivent être pris en compte dans les procédures nécessaires au fonctionnement du réseau de télécommunication de cinquième génération escomptant utiliser des systèmes satellitaires. Cela s'avère particulièrement à propos par exemple pour préserver les batteries des terminaux mobiles. Il est en effet souhaitable que ces terminaux ne recherchent pas le satellite dans une zone non couverte et qu'ils évitent de faire des opérations de registration/(dé)registration et des mises à jour de localisation fréquentes, à cause du caractère intermittent de la couverture.

Pour les réseaux terrestres, les trous de couverture existent également, mais les stations de base n'ont pas une forte mobilité comme dans le cas satellite. Pour les réseaux terrestres les trous de couverture sont fixes, par contre pour les réseaux satellitaires les trous de couvertures sont mobiles et donc plus difficilement prédictibles par un appareil utilisateur.

Pour cette raison, il faut définir des méthodes intelligentes au niveau du réseau (NW ou NetWork) pour pouvoir traquer les zones blanches/les trous de couverture satellite et adapter les procédures de gestion de mobilité en conséquence.

La fourniture des éléments de couverture satellite n'est pas à ce jour définie par le 3GPP en charge de la définition du réseau 5G. Cela entraine que les fonctions de cœur de réseau 5G pouvant en avoir besoin, tels que l'AMF (Access and Mobility Management), en charge de la gestion de l'accès au réseau et de la mobilité des terminaux ou le NEF (Network Exposure Function) donnant des informations relatives au réseau à des services tiers, devront s'interfacer avec autant d'interfaces propriétaires telles que le service Iridium, générant un surcoût d'intégration. En outre, un appel à ces éléments à chaque besoin peut engendrer une surcharge du réseau si un grand nombre d'appareils utilisateurs ont besoin des informations offertes par ces interfaces.

Il existe aujourd'hui un besoin pour une solution efficace et simple pour traiter la dynamicité de la couverture satellitaire.

### EXPOSE DE L'INVENTION

La présente invention vise à permettre un suivi intégré de la couverture satellitaire en temps réel.

La présente invention concerne une fonction de réseau dite de gestion de couverture intégrée dans un cœur de réseau de cinquième génération configuré pour fonctionner en collaboration avec un système satellitaire présentant une couverture dynamique, le cœur de réseau collaborant avec un réseau d'accès (RAN), ladite fonction de réseau de gestion de couverture répondant aux exigences définies pour une architecture basée sur les services pour une fonction de réseau, cette fonction de réseau de gestion de couverture étant en outre configurée pour collecter des informations de couverture par le système satellitaire, pour traiter ces informations de couverture en fonction d'au moins une zone géographique définie par une autre fonction de réseau du cœur de réseau, répondant aussi aux exigences définies pour une architecture basée sur les services, pour générer en temps réel et fournir des informations de disponibilité du réseau d'accès à cette autre fonction de réseau du cœur de réseau.

L'invention propose donc la caractérisation de la couverture d'une zone par le système satellite et sa fourniture aux éléments du cœur de réseau 5G. L'invention propose ainsi une fonction du réseau (NF) au sens du standard, cette fonction de réseau étant dédiée à la collecte et à la fourniture des informations de couverture aux entités qui en ont besoin afin d'adapter en conséquence les autres fonctions du réseau. L'invention définit une nouvelle fonction de cœur de réseau (Network Function - NF) dans l'architecture basée sur les services (SBA). L'invention fonctionne en tant que plateforme centralisée de fourniture d'informations de couverture satellitaire intégrée au réseau 5G.

Il est remarquable que l'architecture basée sur les services, aucunement évoquée jusque-là dans le contexte de l'invention, est particulièrement bien adaptée au besoin de requête ponctuelle pour une couverture satellitaire ainsi qu'à la mise en oeuvre de notifications lorsque la couverture change. Aucune solution connue pour déterminer une couverture satellitaire ne permet d'ailleurs la mise en œuvre de notifications envoyées automatiquement vers les fonctions de réseau. On comprend bien ici l'intérêt et l'originalité de l'invention.

Par ailleurs, le fait de créer une architecture, de façon unique, centralisée et mutualisée pour toutes les fonctions de réseau, permet à toutes ces fonctions de partager la même information. Cela est particulièrement utile pour la mise en œuvre d'algorithmes communs le cas échéant. Ce sera notamment le cas pour la gestion de la mobilité des terminaux et l'optimisation de la durée de vie de la batterie des terminaux. Toutes les fonctions de réseau partagent la même information unique, homogène et mutualisée. De tels avantages sont inconnus des solutions de l'art antérieur.

Elle propose ainsi l'intégration du service de caractérisation dans l'architecture du cœur de réseau, selon les modalités définies par le 3GPP, selon le concept « Service Based Architecture » (SBA).

Par rapport à un service accessible sur internet, une fonction de réseau NF intégrée au SBA présente notamment les avantages suivants, inhérents à l'architecture SBA:
- Normalisation des interfaces et méthodes d'accès à l'information permettant la centralisation et la distribution aux autres fonctions du réseau (NF) de la même information, ici notamment des cartographies, des événements etc,
- Mutualisation de la collecte des informations sur la couverture satellitaire,
- Sécurité,
- Intégration à la politique de virtualisation et de slicing des NFs de l'opérateur,
- Fonctions de gestion de cycle de vie communes aux autres NFs. Il est remarquable que l'invention propose ces avantages pour un service de gestion de couverture satellitaire. En effet, ces avantages ne sont pas spécialement recherchés en première intention lorsque l'homme du métier se penche sur le problème de la couverture satellitaire dynamique.

L'invention peut ainsi être déployée sur tous les réseaux de cinquième génération implémentant donc une architecture basée sur les services disposant d'un accès possible par réseau satellitaire et qui souhaiteraient intégrer les prévisions de couverture satellitaire.

Selon une caractéristique avantageuse, le traitement des informations comprend une extrapolation de la couverture satellitaire en fonction des informations de couverture satellitaire collectées, les informations de disponibilité étant fonction de cette extrapolation.

En utilisant une extrapolation des informations collectées, la fonction de réseau peut générer en temps réel et fournir des informations de couverture futures sur une période de temps variable suivant la fourniture des informations de couverture. Cela permet à l'entité qui a besoin de connaitre l'état de la couverture de gérer ses connexions en fonction du temps et des prévisions de couverture rendue accessibles par la fourniture d'informations selon l'invention.

Avantageusement, les informations de couverture incluent des informations d'opération et maintenance des satellites, des éphémérides des satellites, des informations d'orientation des faisceaux.

Ces informations de couverture permettent à la fonction de réseau de connaitre l'état actuel de la couverture et de générer les informations de disponibilité du réseau sur la base d'un reflet fidèle de la réalité du fonctionnement et du mouvement des satellites.

Selon une réalisation avantageuse, la fonction de réseau est en outre configurée pour collecter, de manière additionnelle, des informations de couverture terrestre, le traitement des informations de couverture intégrant ces informations de couverture terrestre de manière à générer en temps réel et fournir des informations de disponibilité du réseau d'accès tenant compte de la couverture satellitaire et de la couverture terrestre.

L'ajout d'informations sur le réseau d'accès disponible en terrestre permet d'informer les fonctions de réseau requérantes de la fonction de réseau selon l'invention sur la possibilité de basculer sur le réseau terrestre en cas de besoin pendant une période où la couverture satellitaire n'offre pas la possibilité d'un accès au réseau.

Selon un premier mode de fonctionnement, la fonction de réseau est en outre configurée pour :
- recevoir une requête de disponibilité de la part d'une autre fonction de réseau selon l'architecture basée sur les services, cette requête de disponibilité incluant une zone géographique,
- générer en temps réel et fournir, en réponse à la requête de disponibilité, des informations de disponibilité comprenant un état de couverture au moment de la réception de la requête.

Ce mode de fonctionnement correspond au premier mode de fonctionnement en requête/réponse tel que défini dans l'architecture basée sur les services définie dans les documents standardisés. Il permet à toute fonction de réseau de solliciter ponctuellement en cas de besoin la fonction de réseau de l'invention. On remarque ici que l'appel à l'entité qui gère la couverture, ici donc, la fonction de réseau de gestion de couverture, est particulièrement simple et légère en terme d'implémentation et d'intégration dans les cœurs de réseau tels que définis dans les standards. Cela n'est pas le cas dans les solutions de l'art antérieur.

Avantageusement, les informations de disponibilité comprennent en outre des éléments de datation de couverture et d'absence de couverture sur la zone géographique.

Cette caractéristique assure que la fonction de réseau aura les éléments suffisants pour, par exemple modifier de manière appropriée un fonctionnement d'un appareil utilisateur, dans une période à venir suivant la réception de la réponse à sa requête.

Selon une caractéristique avantageuse, la requête de disponibilité comprenant en outre une indication de mode couverture totale ou partielle, les informations de disponibilité comprennent alors en outre des informations de couverture totale ou partielle.

Une telle indication permet de répondre au réel besoin de la fonction de réseau en tenant compte du besoin de couverture totale ou partielle sur la zone géographique concernée.

Selon un autre mode de fonctionnement, la fonction de réseau est configurée pour recevoir une demande d'enregistrement de la part d'une autre fonction de réseau selon l'architecture basée sur les services, pour être enregistrée auprès d'un service d'envoi de notification de disponibilité, ces demandes d'enregistrement incluant une zone géographique,
- lors d'un changement de l'état de la couverture sur la zone géographique de l'enregistrement, générer en temps réel et fournir une notification aux fonctions de réseau enregistrées sur le service, cette notification comprenant des informations de disponibilité incluant des éléments de datation de couverture et d'absence de couverture sur la zone géographique.

Ce mode de fonctionnement correspond au mode enregistrement/notification tel que défini dans l'architecture basée sur les services des standards. Il permet à toute fonction de réseau de s'enregistrer pour être tenu à jour de l'évolution de la couverture sur une zone géographique donnée. On remarque ici que ce système d'enregistrement permettant l'envoi mutualisé de notification donnant des informations de disponibilité du réseau n'est pas actuellement dans les objectifs visés par l'intégration d'un système satellitaire dans un réseau de cinquième génération. L'invention permet la réalisation de cet envoi automatique de manière simple et légère en terme d'implémentation et d'intégration dans les cœurs de réseau tels que définis dans les standards. Aucune solution de l'art antérieur connu ne propose ce service.

Ici aussi, avantageusement, les informations de disponibilité incluent des éléments de datation de couverture et d'absence de couverture sur la zone géographique.

Aussi, avantageusement, la demande d'enregistrement comprenant en outre une indication de mode couverture totale ou partielle, les informations de disponibilité comprennent alors en outre des informations de couverture totale ou partielle.

L'invention concerne aussi un cœur de réseau de cinquième génération configuré pour fonctionner en collaboration avec un système satellitaire présentant une couverture dynamique, le cœur de réseau collaborant avec un réseau d'accès (RAN), ledit cœur de réseau comprenant une fonction de réseau de gestion de couverture selon l'invention, répondant ainsi aux exigences définies pour une architecture basée sur les services pour une fonction de réseau, cette fonction de réseau de gestion de couverture étant ainsi configurée pour collecter des informations de couverture par le système satellitaire, pour traiter ces informations de couverture en fonction d'au moins une zone géographique définie par une autre fonction de réseau du cœur de réseau, répondant aussi aux exigences définies pour une architecture basée sur les services, pour générer en temps réel et fournir des informations de disponibilité du réseau d'accès à cette autre fonction de réseau du cœur de réseau.

La présente invention se propose donc de faire évoluer l'architecture des cœurs de réseau pour prendre en compte des spécificités du système satellitaire.

L'invention concerne enfin un procédé de gestion de couverture implémenté au sein d'une fonction de réseau de gestion de couverture de l'invention, cette fonction de réseau étant intégrée dans un cœur de réseau de cinquième génération configuré pour fonctionner en collaboration avec un système satellitaire présentant une couverture dynamique, le cœur de réseau collaborant avec un réseau d'accès (RAN), ladite fonction de réseau de gestion de couverture répondant aux exigences définies pour une architecture basée sur les services pour une fonction de réseau,
le procédé comprenant les étapes de, pour la fonction de réseau de gestion de couverture :
- collecte d'informations de couverture par le système satellitaire,
- traitement de ces informations de couverture en fonction d'au moins une zone géographique définie par une autre fonction de réseau du cœur de réseau répondant aussi aux exigences définies pour une architecture basée sur les services,
- génération en temps réel et fourniture d'informations de disponibilité du réseau d'accès à cette autre fonction de réseau du cœur de réseau.

Ce procédé de gestion de couverture mis en œuvre dans une fonction de réseau permet de réaliser la collecte, le traitement d'information, la génération et la fourniture d'informations de disponibilité du réseau d'accès. Il peut présenter aussi avantageusement toutes les caractéristiques telles que ci-dessus décrites pour une fonction de réseau.

De manière générale, il est noté ici que les différentes caractéristiques et modes de réalisation/fonctionnement peuvent être implémentés seul ou en association ou juxtaposition avec l'un(e) ou l'autre des caractéristiques et modes de réalisation ainsi que revendiqués. Un mode de réalisation peut donc être implémenté concomitamment avec un autre. Cela permet notamment de traiter des situations différentes selon le contexte ou besoin rencontré. En particulier, il est clair que les deux modes de réalisations sur requête ou sur enregistrement sur un service de notification peuvent être implémentés ensemble au sein d'une même fonction de réseau.

On note aussi ici que les revendications ont été centrées sur une fonction de réseau présentant des caractéristiques et des comportements spécifiques. Il va sans dire que toute revendication d'une autre catégorie, par exemple visant un cœur de réseau comprenant une telle fonction de réseau avec ces mêmes caractéristiques et comportements est à considérer comme étant décrite dans la présente demande et pouvant être ultérieurement revendiqué en tant que tel.

Il en est de même concernant le procédé selon l'invention qui peut par ailleurs présenter toutes les caractéristiques et comportements/configurations tels que revendiquées pour la fonction de réseau et ces caractéristiques et comportements/configurations pourront ultérieurement être revendiqués en tant que tels. En particulier les caractéristiques relatives aux éléments de datation de couverture et d'absence de couverture et à l'indication de mode couverture totale ou partielle concernent également le procédé selon l'invention et peuvent être des caractéristiques ultérieurement revendiquées.

Pour la réalisation des objectifs précédents et des objectifs connexes, un ou plusieurs modes de réalisation comprennent les caractéristiques décrites ci-après de manière complète et détaillée.

### BREVE DESCRIPTION DES DESSINS

La description suivante et les dessins annexés exposent en détail certains aspects illustratifs et ne représentent que quelques-unes des diverses manières dont les principes de l'invention peuvent être employés. D'autres avantages et caractéristiques nouvelles apparaîtront dans la description détaillée suivante, lorsqu'ils seront considérés conjointement avec les dessins, et les modes de réalisation divulgués sont destinés à inclure tous ces aspects et leurs équivalents.
- La figure 1 montre schématiquement l'intégration de la fonction de réseau définie selon l'invention au sein d'un cœur de réseau 5G ;
- La figure 2 illustre schématiquement la définition de zones utiles pour la réalisation de l'invention ;
- La figure 3 illustre schématiquement un mécanisme requête/réponse selon la norme 3GPP définissant l'architecture SBA ; et
- La figure 4 illustre schématiquement un mécanisme de souscription à un événement selon la norme 3GPP définissant l'architecture SBA.

### DESCRIPTION DETAILLEE DES FIGURES ET DES MODES DE REALISATION

Pour une compréhension plus complète de l'invention, celle-ci va maintenant être décrite en détail en référence aux figures ci-jointes. La description détaillée illustrera et décrira ce qui est considéré comme un mode de réalisation préféré de l'invention. Il faut bien sûr comprendre que diverses modifications et changements de forme ou de détail pourraient facilement être apportés sans s'écarter de la portée de l'invention. Il est donc prévu que l'invention ne soit pas limitée à la forme et aux détails exacts montrés et décrits ici, ni à rien de moins que l'ensemble de l'invention divulguée ici et revendiquée ci-après. Les mêmes éléments ont été désignés par les mêmes références dans les différents dessins. Pour des raisons de clarté, seuls les éléments et les étapes qui sont utiles à la compréhension de la présente invention ont été montrés dans les dessins et seront décrits.

L'architecture du cœur de réseau, telle que définie par le 3GPP sous le nom de « service based architecture / SBA » consiste en un ensemble de fonctions produisant des interfaces permettant l'interfonctionnement et le déroulement des procédures nécessaires au fonctionnement du réseau. Elle est spécifiée par l'ensemble des normes TS 29.500, TS 23.501, TS 23.502 et rattachées. Dans le tableau ci-après figure une liste de telles fonctions de réseau définies dans la spécification d'architecture TS 23.501.

Une fonction particulière est la fonction de répertoire du réseau « NRF » (Network Repository Function NRF en anglais) dont le rôle est de tenir à jour un catalogue des services proposés par l'ensemble des autres fonctions de réseau et accessible par l'ensemble des autres fonctions de réseau. La fonction de réseau selon l'invention est ainsi listée au sein de la fonction de répertoire de réseau NRF avec les autres fonctions de réseau susceptibles de faire appel à elle.

| | |
|---|---|
| UDSF | Unstructured Data Storage Function |
| UDM | Unified Data Management |
| UDR | Unified Data Repository |
| NEF | Network Exposure Function |
| NSSF | Network Slice Selection Function |
| AUSF | Authentication Server Function |
| SMSF | SMS Function |
| EIR | 5G Equipment Identity Register |
| LMF | Location Management Function |
| AMF | Access and Mobility Management Function |
| SMF | Session Management Function |
| PCF | Policy Control Function |
| UPF | User Plane Function |
| N31WF | Non-3GPP Interworking Function |
| SEPP | Security Edge Protection Proxy |

L'utilisation de ces fonctions est réalisée en utilisant les procédures telles que décrites dans les normes TS citées ci-dessus.

Dans ce cadre, l'invention peut être désignée par l'acronyme CMNF, pour « Coverage Management Network Function », ou « Coverage Management & Monitoring Network Function ». C'est ainsi une nouvelle fonction à ajouter à l'architecture du cœur de réseau 5G, définie par le « §5.2 Architecture Reference Model » de la spécification technique TS 23.501.

Comme les autres NFs, la fonction de réseau CMNF enregistre donc ses services auprès de la fonction NRF « Network Repository Function » afin que l'ensemble des autres fonctions du cœur de réseau, e.g. AMF, SMF, PCF, NEF ou autres, puissent en faire usage.

Cette nouvelle fonction réalise des actions spécifiques et peut être utilisée pour produire des données spécifiques ainsi que décrit ci-après.

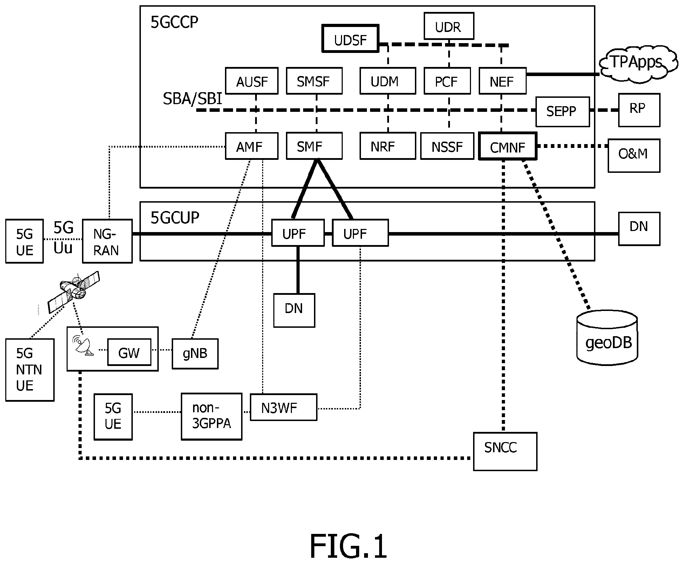

La figure 1 montre schématiquement l'intégration d'une fonction de réseau selon l'invention CMNF au sein d'un cœur de réseau tel qu'existant selon le standard 3GPP pour les télécommunications de cinquième génération.

Comme montré dans cette figure, un cœur de réseau est constitué d'un plan de contrôle 5GCCP où sont regroupées l'ensemble des fonctions de réseau et d'un plan utilisateur 5GCUP selon la découpe architecturale définie dans les normes 3GPP. Un terminal mobile 5G UE va pouvoir se connecter via le réseau d'accès 5G, dit NG-RAN, et donc avoir accès à l'ensemble des stations de base gNB selon la terminologie.

Si le terminal, noté 5G NTN UE sur la figure 1, supporte un accès par satellite, pour que celui-ci soit effectif, il faudra qu'au moins une station de base gNB soit connectée à un élément passerelle GW qui permettra la communication avec le terminal 5G NTN UE via le satellite.

Cet ensemble gNB/GW est en relation avec un centre de contrôle du système satellitaire SNCC (Satellite Network Control Center en anglais). Pour les besoins de l'invention, ce centre de contrôle CNCC est lui-même en relation avec la fonction de réseau de gestion de couverture CMNF pour fournir les éléments de trajectoire des satellites. La fonction de réseau CMNF est par ailleurs aussi en relation avec un système d'opération et maintenance O&M du réseau 5G, qui permet de connaitre l'état de fonctionnement des éléments spécifiques à celui-ci et des éléments de planification du réseau, par exemple les « tracking areas » au sens du standard. La fonction de réseau CMNF peut aussi être en relation avec une base de données géographique geoDB pour accéder à des éléments de description de terrain. Cela est utile pour mieux caractériser, au besoin, la zone géographique sur laquelle porte les requêtes ou les enregistrements des autres fonctions de réseau.

Les deux caractéristiques principales de l'invention sont donc la génération en temps réel de l'empreinte des satellites au sol et l'intégration de la fonction de collecte et de fourniture d'informations dans l'architecture SBA. Ces deux caractéristiques sont réalisées par la fonction de réseau CMNF de l'invention de façon à permettre l'intégration dans la stratégie de virtualisation du cœur de de réseau 5G.

Ainsi pour la génération en temps réel de l'empreinte des satellites au sol, la fonction de réseau CMNF de l'invention collecte des éléments de positionnement des satellites et de couverture de ces satellites, réactualisés selon les besoins.

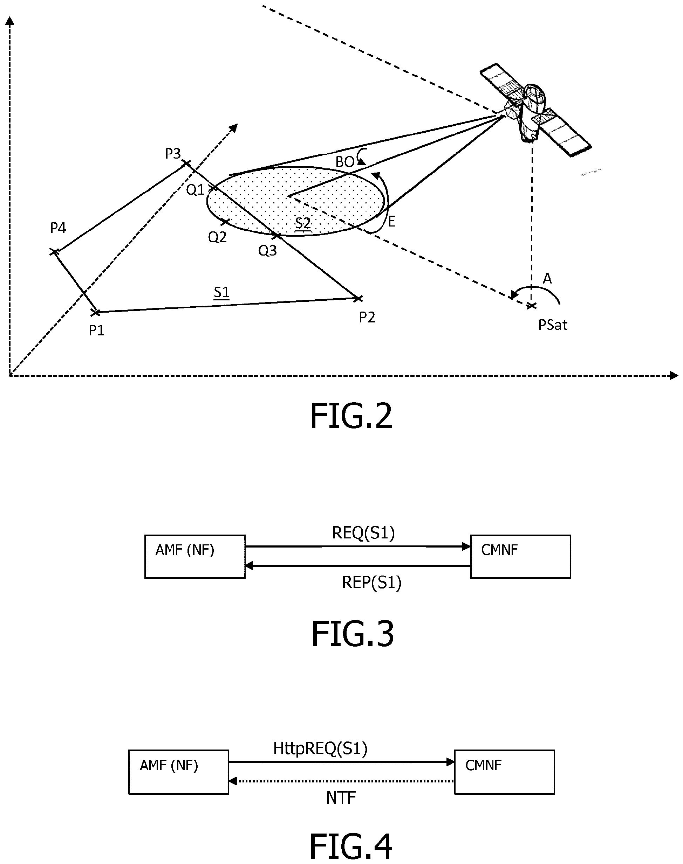

La figure 2 montre entre autres une empreinte S2 d'un satellite au sol. Selon un mode de réalisation avantageux, cette empreinte S2 est calculée avec les coordonnées définissant la position du satellite, les angles, i.e. élévation E, azimut A, définissant l'orientation du faisceau BO et l'angle d'ouverture du faisceau.

La fonction de réseau CMNF collecte des éléments fournis par le centre de contrôle SNCC du système satellite, soit des éphémérides décrivant les trajectoires des différents satellites, des paramètres d'identification des faisceaux, généralement un identifiant de la cellule radio et un index de faisceau, des paramètres de caractérisation des faisceaux, notamment taille et orientation.

La fonction de réseau CMNF de l'invention collecte aussi des éléments fournis par un centre opérations et maintenance du système 5G, soit une cartographie des zones de traçage, appelées « Tracking Area » en anglais, un état de fonctionnement des faisceaux, notamment si le faisceau est fonctionnel ou pas.

Avantageusement, le centre de contrôle SNCC reçoit également des informations d'opérations et maintenance d'une entité du réseau 5G qui procède aux opérations et à la maintenance du système satellitaire.

Ensuite, sur la base de données géographiques de terrain geoDB, la fonction de réseau CMNF calcule, en fonction du temps, l'état d'exposition d'une zone donnée, ainsi que la prochaine période de couverture et de non couverture.

L'intégration dans l'architecture SBA requiert de toute fonction de réseau la fourniture d'une interface programmatique, i.e. une API, accessible pour l'ensemble des clients, que sont les autres fonctions de réseau NFs, en faisant des requêtes au service et/ou en s'abonnant au service pour recevoir des notifications, tel que décrit dans le §7.1 Network Function Service Framework du standard 3GPP TS 23.501. Ainsi la fonction de réseau selon l'invention respecte l'architecture SBA et fonctionne donc en mécanisme requête/réponse ou en mode souscription/notification.

Ces deux modes de fonctionnement sont illustrés respectivement sur les figures 3 et 4.

Sur la figure 3, une fonction AMF (Access Mobility Function) ou une autre fonction de réseau NF, a besoin de connaitre la couverture satellitaire pour un service donné pour un appareil utilisateur donné dont la localisation est connue au moins approximativement par la fonction AMF. Selon l'invention, elle fait simplement une requête REQ(S1) stipulant une zone géographique S1 où se trouve l'appareil utilisateur vers la fonction CMNF de l'invention en respectant les exigences définies dans la norme TS29.500 et elle reçoit en réponse le statut REP(S1) de couverture sur la zone S1, zone où est généralement positionné un appareil utilisateur ayant besoin de connaitre la couverture satellitaire.

Ainsi qu'illustré sur la figure 2, la requête faite par un élément de réseau quelconque va ainsi plus précisément contenir au moins les coordonnées d'un ou plusieurs points P1, P2, P3, P4 définissant une zone géographique S1 pour laquelle l'état de la couverture a besoin d'être connue et, avantageusement, un mode définissant si la couverture partielle doit être considérée ou non. Le mode couverture partielle permettra de rendre compte du fait que le faisceau satellite ne va couvrir qu'une partie de la zone. La connaissance de cette partie pourra être corrélée avec d'autres informations, comme une localisation plus précise d'un terminal pour lequel la fonction de réseau de gestion de couverture a été sollicitée, pour savoir si le terminal pourra recevoir du signal satellite lors du prochain survol de la zone ou non. Dans le cas où seule la couverture totale dans un mode correspondant couverture totale est requise sur la zone questionnée, seule une couverture totale de la zone sera signalée par la fonction de réseau CMNF.

Dans le cas ou plus de deux points sont fournis, la requête concernera donc une surface S1 définie sur la figure 2 par quatre points P1, P2, P3 et P4. On note ici qu'il est aussi envisageable que la définition des contours soit connue par configuration de la fonction de réseau CMNF. Dans ce dernier cas, seul un identifiant X de contour peut être demandé dans la requête, e.g. tracking area X.

La fonction de réseau CMNF va, à partir des empreintes des satellites au sol S2 réactualisées, calculer et retourner dans la réponse l'état de couverture au moment de la réception de la requête : couvert, pas couvert, partiellement couvert. Avantageusement des informations plus précises sont également fournies tels des éléments de datation de début et de fin où S1 sera couverte par S2(x) à 0%, définissant ainsi un « trou de couverture », quel que soit le faisceau(x) et des éléments de datation de début et de fin où S1 sera couverte par S2(x) à CovPercentageMax (> 0% - « éclairage partiel ou total »), quel que soit le faisceau(x).

CovPercentageMax est le pourcentage maximum de la surface S1 couverte par S2(x) lorsque le faisceau (x) traverse la zone. Si CovPercentageMax < à 100, et que le mode « couverture partielle » est demandé, alors la réponse contient avantageusement un paramètre CovPercentageMax, des coordonnées à la surface terrestre du satellite (PSat) au moment de la couverture maximale, des coordonnées de au minimum 3 points Q1, Q2, Q3 tels que situés sur la bordure du faisceau à l'intérieur de la surface S1, le cas échéant, des éléments de datation de début et de fin où S1 sera couverte à 100%. Avantageusement, la réponse contient aussi des éléments d'information permettant l'identification unique du faisceau dans le système, soit le type de satellite, i.e. LEO, MEO, GEO, autre et un identifiant de la cellule radio et un index de faisceau.

Ainsi en résumé, dans un mode requête/réponse, un élément du réseau, par exemple l'AMF, va demander des informations de couverture en identifiant une zone. La fonction de réseau de l'invention CMNF fournira en réponse un ou plusieurs de ces éléments : un état de couverture actuel (couvert, pas couvert, partiellement couvert), le type de couverture : LEO, GEO, MEO ou autre, des éléments de datation de début et de fin du prochain intervalle (ou des prochaines intervalles), durée(s) ou période(s) de couverture, des éléments de datation de début et de fin du (des) prochain(s) trou(s) de couverture, un identifiant du prochain faisceau (cellule, identité satellite) et celui du faisceau courant en case de couverture.

Selon les principes d'architecture SBA, la fonction de réseau CMNF devra pour le service ci-dessus fournir une interface sous le nom « Ncmnf_communication ». Cela est défini dans les documents standardisés.

Sur la figure 4, la fonction AMF, ou une autre fonction de réseau NF, effectue une requête d'enregistrement HttpREQ(S1) auprès de la fonction CMNF de l'invention en signalant une zone S1 pour recevoir des notifications relatives aux couvertures satellitaires pour le cadre géographique S1 défini dans l'enregistrement.

Pour cet enregistrement, dans un exemple d'implémentation, la fonction AMF envoie la requête http URI suivante à la fonction CMNF :
{apiRoot}/{apiName}/{apiVersion}/{apiSpecificResourceUriPart} http://10.0.0.1 /NcmnCEventExposure/v1/apiSpecificResourceUriPart

Dans cette requête, un élément du réseau souhaitant s'abonner au suivi de la couverture d'une zone fournit au moins des coordonnées d'un ou plusieurs points, ou un identifiant de contour préconfiguré et avantageusement un mode définissant si la couverture partielle doit être considérée ou non.

La fonction de réseau CMNF, de façon périodique, va réitérer en tache de fond les mêmes calculs que ceux décrits précédemment. Il déclenchera une notification NTF lors de l'occurrence des événements suivants :
- Zone sous couverture. Dans ce cas, l'événement, si le mode couverture partiel est demandé, contiendra avantageusement des valeurs définies précédemment : CovPercentageMax, coordonnées à la surface terrestre du satellite (PSat), ensemble des points {Qi} tels que définis précédemment.
- Zone hors couverture (0%),

A cette notification NTF seront avantageusement associés des éléments d'information tels que définis précédemment permettant l'identification unique du faisceau dans le système.

Ainsi, en résumé, dans un mode souscription/notification, une fonction de réseau, par exemple l'AMF, s'abonne au suivi de la couverture d'une zone. La fonction de réseau CMNF déclenche alors une notification, lors de la prochaine occurrence de l'événement concerné, en particulier, zone sous couverture, zone hors couverture.

Ici aussi, selon les principes d'architecture SBA, la fonction de réseau CMNF devra pour le service ci-dessus fournir une interface sous le nom Ncmnf_EventExposure.

Par ailleurs, le stockage des informations générées pourra se faire en utilisant une fonction de réseau de stockage des données non structurées UDSF (« Unstructured Data Storage Function » en anglais).

En résumé, l'invention propose ainsi l'intégration de la fourniture des éléments de couverture satellite dans l'architecture SBA du standard 3GPP pour bénéficier des avantages inhérents à l'architecture SBA, permettant la centralisation et la mutualisation des données de couverture, évitant ainsi de solliciter des bases de données dynamiques propriétaires.

L'invention permet l'extrapolation des caractéristiques de couverture pour un temps futur sur requête d'un client abonné à ses services. Par exemple, Il sera très utile à un avion servi par le réseau 5G par satellite de prédire à l'avance les zones de non-couverture et le temps et la durée pendant laquelle ces zones seront survolées.

Dans la description détaillée ci-dessus, il est fait référence aux dessins annexés qui montrent, à titre d'illustration, des modes de réalisation spécifiques dans lesquels l'invention peut être mise en œuvre. Ces modes de réalisation sont décrits de manière suffisamment détaillée pour permettre à l'homme du métier de mettre en pratique l'invention. La description détaillée ci-dessus ne doit donc pas être prise dans un sens limitatif, et la portée de la présente invention est définie uniquement par les revendications annexées, interprétées de manière appropriée.

## Revendications

1. Fonction de réseau dite de gestion de couverture intégrée dans un cœur de réseau de cinquième génération configuré pour fonctionner en collaboration avec un système satellitaire présentant une couverture dynamique, le cœur de réseau collaborant avec un réseau d'accès (RAN), ladite fonction de réseau de gestion de couverture répondant aux exigences définies pour une architecture basée sur les services pour une fonction de réseau, cette fonction de réseau de gestion de couverture étant en outre configurée pour collecter des informations de couverture par le système satellitaire, pour traiter ces informations de couverture en fonction d'au moins une zone géographique définie par une autre fonction de réseau du cœur de réseau, répondant aussi aux exigences définies pour une architecture basée sur les services, pour générer en temps réel et fournir des informations de disponibilité du réseau d'accès à cette autre fonction de réseau du cœur de réseau.

2. Fonction de réseau de gestion de couverture selon la revendication 1, dans laquelle le traitement des informations comprend une extrapolation de la couverture satellitaire en fonction des informations de couverture satellitaire collectées, les informations de disponibilité étant fonction de cette extrapolation.

3. Fonction de réseau de gestion de couverture selon l'une des revendications précédentes, dans laquelle les informations de couverture incluent des informations d'opération et maintenance des satellites, des éphémérides des satellites, des informations d'orientation des faisceaux.

4. Fonction de réseau de gestion de couverture selon l'une des revendications précédentes, en outre configurée pour collecter, de manière additionnelle, des informations de couverture terrestre, le traitement des informations de couverture intégrant ces informations de couverture terrestre de manière à générer en temps réel et fournir des informations de disponibilité du réseau d'accès tenant compte de la couverture satellitaire et de la couverture terrestre.

5. Fonction de réseau de gestion de couverture selon l'une des revendications précédentes, en outre configurée pour :
- recevoir une requête de disponibilité de la part d'une autre fonction de réseau selon l'architecture basée sur les services, cette requête de disponibilité incluant une zone géographique,
- générer en temps réel et fournir, en réponse à la requête de disponibilité, des informations de disponibilité comprenant un état de couverture au moment de la réception de la requête.

6. Fonction de réseau de gestion de couverture selon la revendication 5, dans laquelle les informations de disponibilité comprennent en outre des éléments de datation de couverture et d'absence de couverture sur la zone géographique.

7. Fonction de réseau de gestion de couverture selon l'une des revendications 5 et 6, dans laquelle, la requête de disponibilité comprenant en outre une indication de mode couverture totale ou partielle, les informations de disponibilité comprennent alors en outre des informations de couverture totale ou partielle.

8. Fonction de réseau de gestion de couverture selon l'une des revendications précédentes, en outre configurée pour :
- recevoir une demande d'enregistrement de la part d'une autre fonction de réseau selon l'architecture basée sur les services, pour être enregistrée auprès d'un service d'envoi de notification de disponibilité, ces demandes d'enregistrement incluant une zone géographique,
- lors d'un changement de l'état de la couverture sur la zone géographique de l'enregistrement, générer en temps réel et fournir une notification aux fonctions de réseau enregistrées sur le service, cette notification comprenant des informations de disponibilité incluant des éléments de datation de couverture et d'absence de couverture sur la zone géographique.

9. Fonction de réseau de gestion de couverture selon l'une des revendications 9 et 10, dans laquelle les informations de disponibilité incluent des éléments de datation de couverture et d'absence de couverture sur la zone géographique.

10. Fonction de réseau de gestion de couverture selon l'une des revendications 8 et 9, dans laquelle, la demande d'enregistrement comprenant en outre une indication de mode couverture totale ou partielle, les informations de disponibilité comprennent alors en outre des informations de couverture totale ou partielle.

11. Cœur de réseau de cinquième génération configuré pour fonctionner en collaboration avec un système satellitaire présentant une couverture dynamique, le cœur de réseau collaborant avec un réseau d'accès (RAN), ledit cœur de réseau comprenant une fonction de réseau de gestion de couverture selon l'une des revendications précédentes, répondant ainsi aux exigences définies pour une architecture basée sur les services pour une fonction de réseau, cette fonction de réseau de gestion de couverture étant ainsi configurée pour collecter des informations de couverture par le système satellitaire, pour traiter ces informations de couverture en fonction d'au moins une zone géographique définie par une autre fonction de réseau du cœur de réseau, répondant aussi aux exigences définies pour une architecture basée sur les services, pour générer en temps réel et fournir des informations de disponibilité du réseau d'accès à cette autre fonction de réseau du cœur de réseau.

12. Procédé de gestion de couverture implémenté au sein d'une fonction de réseau de gestion de couverture selon l'une des revendications 1 à 10, cette fonction de réseau étant intégrée dans un cœur de réseau de cinquième génération configuré pour fonctionner en collaboration avec un système satellitaire présentant une couverture dynamique, le cœur de réseau collaborant avec un réseau d'accès (RAN), ladite fonction de réseau de gestion de couverture répondant aux exigences définies pour une architecture basée sur les services pour une fonction de réseau,
le procédé comprenant les étapes de, pour la fonction de réseau de gestion de couverture :
- collecte d'informations de couverture par le système satellitaire,
- traitement de ces informations de couverture en fonction d'au moins une zone géographique définie par une autre fonction de réseau du cœur de réseau répondant aussi aux exigences définies pour une architecture basée sur les services,
- génération en temps réel et fourniture d'informations de disponibilité du réseau d'accès à cette autre fonction de réseau du cœur de réseau.

13. Procédé selon la revendication 12, dans lequel l'étape de traitement des informations comprend une extrapolation de la couverture satellitaire en fonction des informations de couverture satellitaire collectées, les informations de disponibilité étant fonction de cette extrapolation.

14. Procédé selon l'une des revendications 12 et 13, dans lequel l'étape de collecte comprend la collecte, de manière additionnelle, d'informations de couverture terrestre, l'étape de traitement des informations de couverture intègre ces informations de couverture terrestre et l'étape de génération et de fourniture des informations de disponibilité du réseau d'accès tenant compte de la couverture satellitaire et de la couverture terrestre.

15. Procédé selon l'une des revendications 12 à 14, le procédé comprenant une étape préliminaire de réception d'une requête de disponibilité de la part d'une autre fonction de réseau selon l'architecture basée sur les services, cette requête de disponibilité incluant une zone géographique, les informations de disponibilité étant ainsi générées et fournies en réponse à la requête de disponibilité et comprenant un état de couverture au moment de la réception de la requête.

16. Procédé selon l'une des revendications 12 à 15, le procédé comprenant une étape préliminaire de réception d'une demande d'enregistrement de la part d'une autre fonction de réseau selon l'architecture basée sur les services, pour être enregistrée auprès d'un service d'envoi de notification de disponibilité, ces demandes d'enregistrement incluant une zone géographique, et, lors d'un changement de l'état de la couverture sur la zone géographique de l'enregistrement, une étape d'envoi d'une notification aux fonctions de réseau enregistrées sur le service, cette notification réalisant la fourniture des informations de disponibilité générées en temps réel.
